# Europäisches Patentamt

# European Patent Office

# Office européen des brevets

(19)

(11) Veröffentlichungsnummer : **0 481 954 A1**

(12) **EUROPÄISCHE PATENTANMELDUNG**

(21) Anmeldenummer : **91890239.6**

(22) Anmeldetag : **10.10.91**

(51) Int. Cl.⁵ : **H04B 10/00**

(30) Priorität : **19.10.90 AT 2113/90**
**19.10.90 AT 2112/90**
**19.10.90 AT 2114/90**

(43) Veröffentlichungstag der Anmeldung :
**22.04.92 Patentblatt 92/17**

(84) Benannte Vertragsstaaten :
**AT BE CH DE DK FR GB IT LI NL SE**

(71) Anmelder : **Alcatel Austria Aktiengesellschaft**
**Scheydgasse 41**
**A-1210 Wien (AT)**

(72) Erfinder : **Strasser, Helmut, Ing.**
**Hockegasse 69**
**A-1180 Wien (AT)**
Erfinder : **Wolfgang, Johann, Ing.**
**Carabelligasse 5/134**
**A-1210 Wien (AT)**
Erfinder : **Doringer, Kurt, Ing.**
**Wienergasse 47**
**A-2380 Perchtoldsdorf (AT)**

(54) **Enrichtung zum Anschalten von Teilnehmerendgeräten mit optischer Übertragung.**

(57) Einrichtung (3) zum Anschalten von Teilneh-merendgeräten (2, 20) an ein LWL-Ü-bertragungsnetz. Die Steckdose (3) enthält mehrere Steckdosenplätze (13), und einen Strahlenteiler (4, 19), der das Signal des LWL-Netzes (1) aufteilt. Werden wellenlängenselek-tive Strahlenteiler (19) verwendet, so sind die Steckdosenplätze für unterschiedliche Wellen-längenbereiche vorgesehen.

Fig. 2

Die Erfindung betrifft eine Einrichtung zum Anschalten von Teilnehmerendgeräten mit optischer Übertragung von Informationen, an ein optisches Übertragungsnetz und an das Stromversorgungsnetz, bestehend aus Wandsteckdosen und den mit Steckern versehenen Anschlußkabeln für die Endgeräte.

Bei bekannten Teilnehmerendgeräten ist es üblich, Signalleitungen und Stromversorgungsleitungen als getrennte Anschlußkabel auszubilden. Dementsprechend sind auch die Anschlußstecker und die entsprechenden Steckdosen voneinander getrennt und unabhängig. Zwei Gründe sind dafür maßgebend. Erstens werden Stromversorgungsnetz und Signalnetz in der Regel zeitlich und örtlich unabhängig voneinander verlegt. Zweitens werden durch die Trennung gegenseitige induktive Störungen abgeschwächt.

Diese Anordnung wurde bisher auch in optischen Teilnehmernetzen beibehalten. Der Nachteil einer solchen getrennten Anordnung ist vor allem die doppelte Ausführung der Stecker und der Anschlußkabel. Dies ist nicht nur aufwendig, sondern auch in der Anwendung umständlich und außerdem in der äußeren Gestaltung nicht optimal.

Es sind Lichtwellenleiter (LWL)-Steckeinrichtungen bekannt, die den Anschluß von einer Teilnehmerendeinrichtung an ein optisches Übertragungsnetz ermöglichen. Will man mehrere Endeinrichtungen gleichzeitig und am gleichen Ort an das optische Netz anschließen, so muß die Anzahl der Steckdosen entsprechend erweitert werden. Eine derartige Erweiterung erfordert hohen Montageaufwand.

Moderne Glasfaserkabel ermöglichen den Aufbau von sehr breitbandigen Übertragungsnetzen. Die Glasfasern sind meist aus einem Material hergestellt, das durch seinen frequenzabhängigen Dämpfungsverlauf mehrere Übertragungsbereiche aufweist. Beispielsweise ist es üblich, im 800nm- Bereich digitale Sprach- oder Datensignale zu übertragen und im 1300nm- Bereich Breitbandsignale, wie z.B. Fernsehen. Will man an ein solches Kabelnetz Teilnehmerendgeräte anschließen, die jeweils nur einen Bereich ausnützen, so müssen Frequenzweichen oder geeignete Filter vorgesehen werden.

Bei bekannten Einrichtungen sind solche Frequenzweichen in den Endgeräten eingebaut oder als entsprechendes Zusatzgerät ausgebildet. Im ersten Fall ist vor allem der hohe Aufwand nachteilig, da jedes Gerät eine Frequenzweiche enthalten muß. Ein weiterer Nachteil besteht darin, daß eine übliche Lichtwellenleiter - Steckdose den Anschluß nur eines Gerätes erlaubt, obwohl von dem Gerät nur ein Teil des übertragenden Lichtspektrums genützt wird.

Es ist Aufgabe der Erfindung, den Aufwand zu vermindern und die Handhabung der Stecker zu verbessern und zu vereinfachen.

Die Erfindung löst diese Aufgabe dadurch, daß in der Steckdose mindestens ein integrierter Steckdosenplatz vorgesehen ist, der mindestens einen Lichtwellenleiter-Steckverbinder und die für das Teilnehmerendgerät benötigten Stromversorgungsstifte enthält, daß die optischen Signalleiter und die Stromversorgungsleiter jeweils einer Teilnehmerendeinrichtung zu einem gemeinsamen Anschlußkabel integriert sind, und daß dieses Kabel mit einem integrierten Stecker versehen ist, der mindestens einen Lichtwellenleiter-Steckverbinder und die Stromversorgungssteckerstifte enthält.

Diese Anordnung vermindert den Aufwand für die Steckvorrichtung und das Anschlußkabel. So ist beispielsweise nur ein einziges Steckergehäuse mit einer einzigen Steckerführung bzw. -arretierung notwendig. Im Teilnehmerendgerät ist nur eine einzige Vorrichtung für Kabelauslaß und Zugentlastung vorzusehen.

Eine Ausgestaltung der Erfindung sieht vor, daß die Steckdose mehrere integrierte Steckdosenplätze enthält und daß in der Steckdose mindestens ein Strahlenteiler vorgesehen ist, an den einerseits der Lichtwellenleiter des optischen Übertragungsnetzes und anderseits die Lichtwellenleiter-Steckverbinder für die einzelnen Steckdosenplätze angeschlossen sind.

Diese Ausbildung ist besonders für optische Übertragungsnetze mit Baumstruktur geeignet. Solche Netze können in mehreren hierarchischen Ebenen Strahlenteiler aufweisen. Eine, beispielsweise die letzte Ebene, ist im erfindungsgemäßen Falle in der Steckdose untergebracht. An jedem der Steckdosenplätze kann jeweils ein Endgerät angeschlossen werden.

Will man einen Verteilerstecker schaffen, der den Anschluß mehrerer Teilnehmerendeinrichtungen an eine LWL-Steckdose mit nur einem Steckplatz ohne zusätzlichen Montageaufwand ermöglicht, so sieht eine Weiterbildung der Erfindüng vor, daß im Verteilerstecker mindestens ein Strahlenteiler vorgesehen ist, der einerseits mit dem LWL-Steckverbinder des Steckerteiles und anderseits mit den LWL-Steckverbindern der Steckdosenplätze verbunden ist und daß sowohl der Steckerteil als auch die Steckdosenplätze Stromversorgungssteckverbinder enthalten.

Ein derartiger Verteilerstecker bildet einen Adapter der einerseits in einfacher Weise in die vorhandene Steckdose eingesteckt werden kann und der anderseits den Anschluß für mehrere Teilnehmerendgeräte bietet.

In einer Ausgestaltung der Erfindung ist vorgesehen, daß der Strahlenteiler wellenlängenselektiv ist. Jeder Steckdosenplatz ist für einen anderen Wellenlängenbereich vorgesehen. So ist beispielsweise ein Steckdosenplatz für den Anschluß eines Breitbandendgerätes, ein anderer für den Anschluß eines digitalen Telefonapparates zuständig.

Es werden aber auch oft mehrere gleichwertige Anschlußmöglichkeiten gewünscht. Beispielsweise soll neben dem Telefonapparat auch der Anschluß eines Fernkopierers oder eines Datenendgerätes möglich sein. Um dies zu ermöglichen sieht eine Weiterbildung der Erfindung vor, daß der Strahlenteiler wellenlängenunabhängig ist.

In einer weiteren Ausgestaltung der Erfindung enthält die Einrichtung eine beliebige Kombination von wellenlängenselektiven und wellenlängenunabhängigen Strahlenteilern, wobei jeweils ein sekundärseitiger Anschluß eines Strahlenteilers mit dem primären Anschluß des weiteren Strahlenteilers verbunden ist. So können beispielsweise nach einer Aufteilung des gesamten Lichtspektrums in mehrere Wellenlängenbereiche für beispielsweise einen Wellenlängenbereich mehrere gleiche Steckdosenplätze bereitgestellt werden.

Eine weitere Ausgestaltung der Erfindung sieht vor, daß in den Steckdosenplätzen bewegliche bedeckungen vorgesehen sind, die im nichteingesteckten Zustand die LWL-Steckverbinder optisch abdecken. Durch diese Ausbildung sind die optischen Steckverbinder im unbenützten Zustand vor Verschmutzung geschützt. Außerdem bietet sie auch Schutz vor etwaigen mit hoher Lichtenergie austretenden Lichtstrahlen.

Gemäß einer weiteren Ausgestaltung der Erfindung ist in der Steckdose ein Netzgerät vorgesehen. Es ist an das Stromversorgungsnetz angeschlossen und liefert an die elektrischen Steckverbinder die für die Teilnehmerendgeräte benötigten Gleich- und/oder Wechselspannungen.

Werden von den unterschiedlichen Endgeräten unterschiedliche Spannungsversorgungen benötigt, so werden die entsprechenden Steckdosenplätze mit den entsprechenden Ausgängen des Netzgerätes verbunden.

In einer Weiterbildung der Erfindung enthält das in der Steckdose integrierte Netzgerät eine Batterie, vorzugsweise einen wiederaufladbaren Akkumulator. Eine derartige Anordnung dient bei Ausfall des Stromversorgungsnetzes zumindest kurzfristig als Ersatzstromquelle.

Eine weitere Ausgestaltung der Erfindung sieht vor, daß optische Anzeigeeinrichtungen mit Leuchtdioden zur Anzeige des Zustandes der Versorgungsspannungen vorgesehen sind. In einfacher Weise kann dabei ein Spannungseinbruch und/oder -ausfall ohne Zusatzgeräte erkannt werden.

Die Erfindung wird nun anhand eines in der nachfolgenden Zeichnung dargestellten Ausführungsbeispiels näher erläutert.

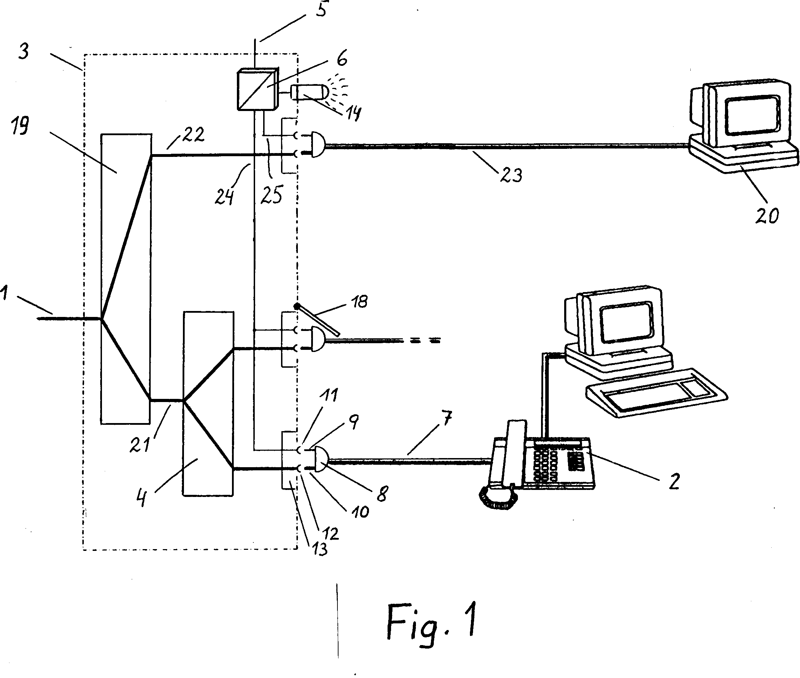

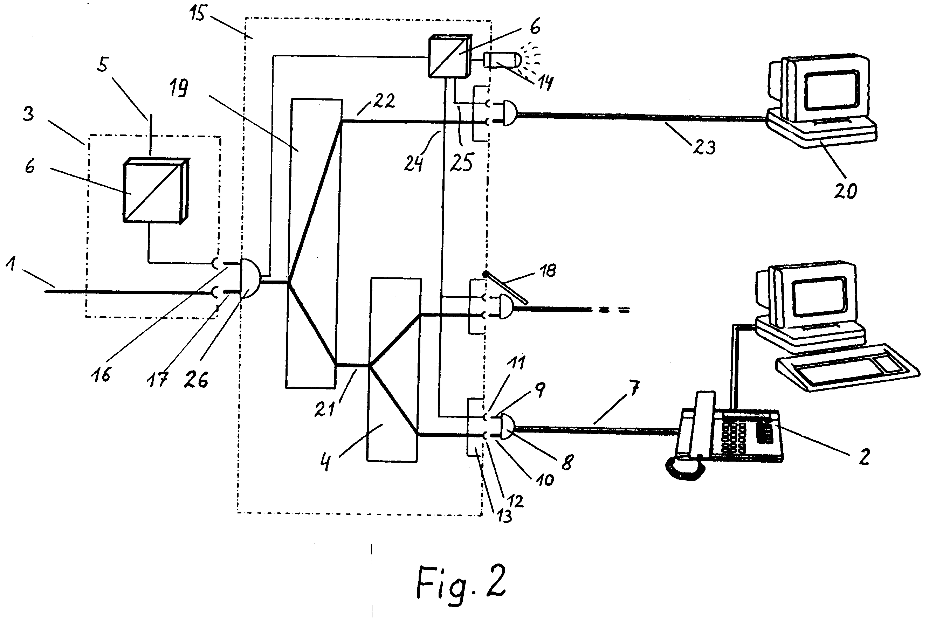

In Fig.1 ist eine erfindungsgemäße Wandsteckdose und in Fig.2 ein erfindungsgemäßer Verteilerstecker dargestellt.

Wie in der Fig.1 ersichtlich, können beispielsweise zwei Teilnehmerendgeräte 2, die im gezeigten Beispiel jeweils aus einer Kombination aus einem digitalen Telefonapparat und einem Datentermirial bestehen, und ein Fernsehgerät 20 über eine dreiteilige Steckdose 3 sowohl an den Lichtwellenleiter (LWL)1 eines optischen Übertragungsnetzes, als auch an die Leitungen 5 des Stromversorgungsnetzes angeschlossen werden. Die Steckdose 3 enthält drei Steckdosenplätze 13 mit jeweils einem LWL-Steckverbinder 12 und den Stromversorgungssteckkontakten 11. Der Stromversorgungsanschluß ist der Einfachheit halber in der Fig.1 nur durch einen Kontakt dargestellt. Ein in der Steckdose 3 eingebauter wellenlängenselektiver Strahlenteiler 19 ist auf der einen Seite mit dem Lichtwellenleiter 1 verbunden. Auf der anderen Seite ist der Anschluß 22, beispielsweise für den 1300nm-Bereich, mit dem LWL-Steckverbinder des Steckdosenplatzes verbunden, an den wiederum das Breitbandgerät 20 angeschlossen ist.

Der zweite Anschluß 21, der beispeilsweise für den 800nm-Bereich vorgesehen ist, ist mit der einen Seite eines wellenlängenunabhängigen Strahlenteilers 4 verbunden. Dieser wiederum ist mit seinen beiden Anschlüssen auf der anderen Seite mit den LWL-Steckverbindern 12 der beiden restlichen Steckdosenplätze 13 verbunden. Er verteilt dabei das aus dem optischen Übertragungsnetz 1 über den wellenlängenselektiven Strahlenteiler 19 kommende Signal auf die LWL-Steckverbinder 13 und sammelt die an den LWL-Steckverbindern 13 von den Teilnehmerendgeräten 2 ankommenden Signale zur Weiterleitung an das Übertragungsnetz 1.

Im gezeigten Beispiel ist also ein Steckdosenplatz für den 1300nm-Bereich zum Anschluß eines Fernsehgerätes 20 und zwei Steckdosenplätze sind für den 800nm-Bereich zum Anschluß jeweils eines ISDN-Endgerätes vorgesehen.

Die Steckdose 3 enthält weiters ein Netzgerät 6, das aus dem Stromversorgungsnetz 5 gespeist wird und dessen Ausgänge die von den Teilnehmerendgeräten 2 bzw. 20 benötigten Versorgungsspannungen an die jeweiligen Stromversorgungssteckverbinder 11 liefert. Der Zustand der Versorgungsspannungen wird durch an der Steckdose 3 sichtbar eingebaute Leuchtdioden 14 angezeigt.

Die Teilnehmerendgeräte 2 bzw. 20 sind über integrierte Anschlußkabel 7 bzw. 23, die sowohl den Lichtwellenleiter als auch die Stromversorgungsleiter enthalten, mit jeweils einem integrierten Stecker 8 versehen, der sowohl den LWL-Steckverbinder 10 als auch die erforderlichen Stromversorgungssteckerstifte 9 enthält.

Es ist weiters denkbar, daß der Lichtwellenleiter 1 des optischen Übertragungsnetzes und die Leiter 5 des Stromversorgungsnetzes zur Gänze oder in Teilabschnitten des Netzes innerhalb einer hierarchischen Einheit als integriertes Kabel ausgeführt sind.

Die Steckdosenplätze 13 enthalten weiters jeweils eine bewegliche bedeckung 18, die im unbenützten Zustand auf den Steckdosenplatz klappt und diesen abdeckt. Vor Einschieben eines Steckers 8 muß die bedeckung 18 aufgeklappt werden. Es ist auch eine schiebbare bedeckung denkbar, die durch den Einsteckvorgang des Steckers 8 automatisch in die Offenstellung geschoben wird. Derartige Steckerabdeckungen sind an sich bekannt, sodaß hier nicht näher darauf eingegangen wird.

Wie in der Fig.2 ersichtlich, können beispielsweise zwei Teilnehmerendgeräte 2, die im gezeigten Beispiel jeweils aus einer Kombination aus einem digitalen Telefonapparat und einem Datenterminal bestehen, und ein Fernsehgerät 20 über einen Verteilerstecker 15 an eine einteilige Steckdose 3 angeschlossen werden. Die Steckdose 3 ist sowohl an den Lichtwellenleiter (LWL)1 eines optischen Übertragungsnetzes, als auch an die Leitungen 5 des Stromversorgungsnetzes angeschlossen und enthält eine Stromversorgungseinrichtung 6.

Der Verteilerstecker 15 enthält einen Steckerteil 26 mit einem LWL-Steckverbinder 17 und den Stromversorgungssteckkontakten 16 und drei Steckdosenplätze 13 mit jeweils einem LWL-Steckverbinder 12 und den Stromversorgungssteckkontakten 11. Ein im Verteilerstecker 15 eingebauter wellenlängenselektiver Strahlenteiler 19 ist auf der einen Seite mit dem Lichtwellenleiter 17 des Steckerteiles 26 verbunden. Auf der anderen Seite ist der Anschluß 22, beispielsweise für den 1300 nm-Bereich, mit dem LWL-Steckverbinder des Steckdosenplatzes verbunden, an den wiederum das Breitbandendgerät 20 angeschlossen ist.

Der zweite Anschluß 21, der beispielsweise für den 800 nm - Bereich vorgesehen ist, ist mit der einen Seite eines wellenlängenunabhängigen Strahlenteilers 4 verbunden. Dieser wiederum ist mit seinen beiden Anschlüssen auf der anderen Seite mit den LWL-Steckverbindern 12 der beiden restlichen Steckdosenplätze 13 verbunden.

Er verteilt dabei das aus dem optischen Übertragungsnetz 1 über den wellenlängenselektiven Strahlenteiler 19 kommende Signal auf die LWL-Steckverbinder 13 und sammelt die an den LWL-Steckverbindern 13 von den Teilnehmerendgeräten 2 ankommenden Signale zur Weiterleitung an das Übertragungsnetz 1.

Im gezeigten Beispiel ist also ein Steckdosenplatz für den 1300nm-Bereich zum Anschluß eines Fernsehgerätes 20 und zwei Steckdosenplätze sind für den 900nm-Bereich zum Anschluß jeweils eines ISDN-Endgerätes vorgesehen.

Der Verteilerstecker 15 enthält weiters ein Netzgerät 6, das aus dem Stromversorgungsnetz 5 gespeist wird und dessen Ausgänge die von den Teilnehmerendgeräten 2 bzw. 20 benötigten Versorgungsspannungen an die jeweiligen Stromversorgungssteckverbinder 11 liefert. Der Zustand der Versorgungsspannungen wird durch am Verteilerstecker 15 sichtbar eingebaute Leuchtdioden 14 angezeigt.

Alle weiteren in der Fig.2 gezeigten Teile sind aus der Fig.1 bekannt und sind daher mit den selben Bezugszeichen versehen.

Wie bereits aus der elektrischen Anschlußtechnik bekannt ist, kann der Verteilerstecker aus zwei getrennten Bauteilen bestehen, nämlich aus einem Stecker und einer Kupplung mit mehreren Steckdosenplätzen, die mit einem die Lichtwellenleiter und Stromversorgungsleiter enthaltenden integrierten Verbindungskabel miteinander verbunden sind.

## Patentansprüche

1.  Einrichtung zum Anschalten von Teilnehmerendgeräten (2, 20) mit optischer Übertragung von Informationen, an ein optisches Übertragungsnetz (1) und an das Stromversorgungsnetz (5), bestehend aus Wandsteckdosen (3) und den mit Steckern (8) versehenen Anschlußkabeln (1) für die Endgeräte (2), **dadurch gekennzeichnet**, daß in der Steckdose (3) mindestens ein integrierter Steckdosenplatz (13) vorgesehen ist, der mindestens einen Lichtwellenleiter-Steckverbinder (12) und die für das Teilnehmerendgerät (2) benötigten Stromversorgungsstifte (11) enthält, daß die optischen Signalleiter und die Stromversorgungsleiter jeweils einer Teilnehmerendeinrichtung (2) zu einem gemeinsamen Anschlußkabel (1) integriert sind, und daß dieses Kabel (1) mit einem integrierten Stecker (8) versehen ist, der mindestens einen Lichtwellenleiter-Steckverbinder (10) und die Stromversorgungssteckerstifte (9) enthält.

2.  Einrichtung nach Anspruch 1, **dadurch gekennzeichnet**, daß die Steckdose (3) mehrere integrierte Steckdosenplätze (13) enthält und daß in der Steckdose (3) mindestens ein Strahlenteiler (4) vorgesehen ist, an den einerseits der Lichtwellenleiter (1) des optischen Übertragungsnetzes und anderseits die Lichtwellenleiter-Steckverbinder (12) für die einzelnen Steckdosenplätze (13) angeschlossen sind.

3.  Einrichtung für den Anschluß mehrerer Teilnehmerendgeräte (2) mit optischer Nachrichtenübertragung an eine Einrichtung nach Anspruch 1 oder 2, bestehend aus einem einen Steckerteil (26) und mehreren Steckdosenplätzen (13) enthaltenden Verteilerstecker (15), **dadurch gekennzeichnet**, daß im Verteilerstecker (15) mindestens ein Strahlenteiler (4, 19) vorgesehen ist, der einerseits mit dem LWL-Steckverbinder (17) des Steckerteiles (26) und andererseits mit den LWL-Steckverbindern (12) der Steckdosenplätze (13) verbunden ist und daß sowohl der Steckerteil (26) als auch die Steckdosenplätze (13) Stromversorgungssteckverbinder (11, 16) enthalten.

4. Einrichtung nach einem der Ansprüche 1 bis 3, **dadurch gekennzeichnet**, daß der Strahlenteiler (19) wellenlängenselektiv ist.

5. Einrichtung nach einem der Ansprüche 1 bis 3, **dadurch gekennzeichnet**, daß der Strahlenteiler (4) wellenlängenunabhängig ist.

6. Einrichtung nach Anspruch 4 und 5, **gekennzeichnet durch** eine beliebige Kombination von wellenlängenselektiven (19) und wellenlängenunabhängigen (4) Strahlenteilern, wobei jeweils ein sekundärseitiger Anschluß (21) eines Strahlenteilers (19) mit dem primären Anschluß des weiteren Strahlenteilers (4) verbunden ist.

7. Einrichtung nach einem der Ansprüche 1 bis 6, **dadurch gekennzeichnet**, daß in den Steckdosenplätzen (13) bewegliche Abdeckungen (18) vorgesehen sind, die im nichteingesteckten Zustand die LWL-Steckverbinder (12) optisch abdecken.

8. Einrichtung nach einem der Ansprüche 1 bis 7, **dadurch gekennzeichnet**, daß ein Netzgerät (6) vorgesehen ist, das die für die Teilnehmerendgeräte (2, 20) benötigten Gleich- und/oder Wechselspannungen liefert.

9. Einrichtung nach Anspruch 8, **dadurch gekennzeichnet**, daß das Netzgerät (6) eine Batterie, vorzugsweise einen wiederaufladbaren Akkumulator, enthält.

10. Einrichtung nach einem der Ansprüche 1 bis 9, **dadurch gekennzeichnet**, daß eine optische Anzeigeeinrichtung beispielsweise mit einer Leuchtdiode (14) zur Anzeige des Zustandes der Versorgungsspannung vorgesehen ist.

Fig. 1

Fig. 2

EP 0 481 954 A1

Europäisches
Patentamt

**EUROPÄISCHER RECHERCHENBERICHT**

Nummer der Anmeldung

EP 91 89 0239

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 142 970 (AT & T) * Seite 2, Zeile 30 - Seite 4, Zeile 10; Seite 7, Zeilen 24-30; Figur 1 * | 1 | H 04 B 10/00 |
| Y | | 2-4,8-10 | |
| A | | 5,6 | |
| | --- | | |
| Y | US-A-4 326 298 (FROMM et al.) * Figur 1; Spalte 3, Zeile 54 - Spalte 4, Zeile 27 * | 2-4 | |
| | --- | | |
| Y | EP-A-0 318 710 (ABB) * Spalte 1, Zeilen 9-25; Spalte 2, Zeilen 16-18; Spalte 2, Zeile 50 - Spalte 3, Zeile 13 * | 8-10 | |
| | --- | | |
| A | PATENT ABSTRACTS OF JAPAN, Band 9, Nr. 321 (E-367)[2044], 17. Dezember 1985; & JP-A-60 153 235 (MITSUBISHI) 12-08-1985 * Zusammenfassung * | 1 | |
| | ----- | | |

**RECHERCHIERTE SACHGEBIETE (Int. Cl.5)**

H 04 B
G 02 B
H 02 G
H 04 J

Der vorliegende Recherchenbericht wurde für alle Patentansprüche erstellt

| Recherchenort | Abschlußdatum der Recherche | Prüfer |
|---|---|---|
| DEN HAAG | 13-12-1991 | WAGNER U. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)